# EUROPEAN PATENT SPECIFICATION

(11) **EP 2 447 046 B1**
(45) Date of publication and mention of the grant of the patent: **16.06.2021**
(21) Application number: 11186869.1
(22) Date of filing: 27.10.2011
(51) Int. Cl.: B29C 64/40, B29C 64/112, B33Y 10/00

(54) **Three-dimensional shaping apparatus and three-dimensional shaping method**
Dreidimensionale Formungsvorrichtung und dreidimensionales Formungsverfahren
Procédé de formage tridimensionnel et appareil de formage tridimensionnel

(30) Priority: 01.11.2010 JP 2010245085
(43) Date of publication of application: 02.05.2012
(73) Proprietor: Keyence Corporation, Osaka-shi Osaka 533-8555 (JP)
(72) Inventor: Suzuki, Hideyuki, Osaka, 533-8555 (JP); Suzaki, Ryohei, Osaka, 533-8555 (JP)
(74) Representative: Hoffmann Eitle

(56) References cited:
- JP-A- 2004 255 839
- US-A1- 2004 175 451
- US-A1- 2004 187 714
- US-B1- 6 259 962

## Description

### BACKGROUND OF THE INVENTION

### 1. Field of the Invention

The present invention relates to a three-dimensional shaping apparatus and a three-dimensional shaping method for fabricating a stereoscopic shaped object in an ink-jet manner.

### 2. Description of Related Art

Conventionally, there have been known apparatuses which successively laminate resin layers for respective cross sections of a shaped object for performing stereoscopic shaping for forming a shaped object which forms a three-dimensional shaped-object model, wherein the aforementioned respective cross sections are provided by sectioning the shaped object in a plurality of parallel planes.

Particularly, in the field of rapid prototyping (RP), which is used in prototyping in product developments and the like, there are employed laminate shaping methods which enable three-dimensional shaping. Such laminate shaping methods are adapted to slice a three-dimensional CAD data about a product, create data like laminated thin plates, as original production data, and laminate materials such as powder members, resins, steel plates, paper and the like thereon to create a prototype. As such laminate shaping methods, there are known an ink-jet method, a powder method, an optical shaping method, a sheet lamination method, an extrusion method, and the like. Among these methods, in the ink-jet method, a liquefied material is injected, and then cured to form a layer through irradiation of ultraviolet light (UV), cooling or the like. With such a method, it is possible to apply the principle of an ink-jet printer thereto, which offers the advantage that high definition can be easily realized.

A three-dimensional shaping apparatus of a resin layer-lamination type is adapted to eject a model material and a supporting material onto a shaping plate while performing scanning in XY directions, thereby laminating layers in a height direction for attaining shaping, wherein the model material is to form a final shaped object, and the supporting material is to support protruding (overhang) portions of the model material and is also to be finally removed therefrom. The model material and the supporting material are formed from resins having properties of being cured by irradiation of ultraviolet light. An ultraviolet-light lamp capable of emitting ultraviolet light is scanned in the XY directions together with the nozzles for ejecting the model material and the supporting material, so that the model material and the supporting material ejected from the nozzles are irradiated with the ultraviolet light to be cured.

Patent Document 1: Japanese Unexamined Patent Publication No. 2003-535712

Since the supporting material is to be finally removed, the supporting material is preferably made of a material having a certain degree of softness and flexibility, in consideration of ease of the removal thereof. However, depending on characteristics of the resin used as the supporting material, such a resin with softness has the problem that it tends to deform and deliquesce due to heat and humidity. Further, if the supporting material has a poor strength, the supporting material will collapse by being grasped by a user. Further, if the supporting material contains a non-curable ingredient in consideration of ease of melting thereof, the supporting material becomes sticky at its surface, which induces the problem that the user grasping the supporting material has an uncomfortable feeling.

From the aforementioned viewpoints, the supporting material is required to exhibit enough rigidity so as not to deform due to heat and humidity and also so as not to collapse even if it is grasped by a user. On the other hand, in view of the aim of supporting the protruding portions of the model material by the supporting material, the supporting material is required to exhibit enough rigidity to support the model material.

However, if the rigidity thereof is increased, this makes it difficult to strip off the supporting material from the model material, in removing the supporting material. This may also induce the problem that operations for removing the supporting material become troublesome, since for example, the model material may be broken by being stripped off together with the supporting material, when the supporting material is removed. As described above, the supporting material is required to exhibit inconsistent properties of being easily removed and being easily handled. Therefore, there has been a need for supporting materials capable of satisfying these inconsistent requirements.

Further, US 2004/187714 A1 is concerned with compositions and methods for use in three-dimensional model printing. JP 2004 255839 A is concerned with an inkjet three-dimensionally shaping device and shaping method.

### SUMMARY OF THE INVENTION

The present invention has been made in view of the above conventional problems and mainly aims at providing a three-dimensional shaping apparatus and a three-dimensional shaping method which are capable of facilitating removal of supporting materials while maintaining ease of handling thereof.

In order to achieve the above object, a three-dimensional shaping apparatus according to one embodiment of the present invention as defined in claim 1, is a three-dimensional shaping apparatus for repeatedly performing operations for ejecting, onto a shaping plate 40, a model material MA and a supporting material SA as shaping materials while performing scanning at least in a single direction, and for curing the materials to form slices having a predetermined thickness in a height direction, and laminating these slices in the height direction for performing shaping, the model material MA being to form a final shaped object, and the supporting material SA being to support a protruding portion of the model material MA and to be finally removed, the three-dimensional shaping apparatus including: the shaping plate 40 for placing a shaped object thereon; a shaping-material ejection device including a plurality of model-material ejection nozzles 21 for ejecting the model material MA and a plurality of supporting-material ejection nozzles 22 for ejecting the supporting material SA, such that these plurality of nozzles are arranged in a single direction; a curing device 24 for curing the model material MA and the supporting material SA; a head portion 20 including the shaping-material ejection device and the curing device 24; a horizontal driving device for reciprocatingly scanning the head portion 20 in a horizontal direction; a vertical driving device for moving positions of the head portion 20 and the shaping plate 40 with respect to each other in the height direction; and a control device for controlling driving of the horizontal driving device and the vertical driving device and for controlling the ejection by the shaping-material ejection device and the curing by the curing device 24, wherein the control device performs control for causing the horizontal driving device to reciprocatingly scan the head portion 20 in a single direction, further causing the shaping-material ejection device to eject the model material MA and the supporting material SA onto the shaping plate 40 and causing the curing device 24 to cure the model material MA and/or the supporting material SA at least in one of forward and rearward paths during the reciprocating scanning to form the slices, further for moving the positions of the shaping plate 40 and the head portion 20 with respect to each other in the height direction, and for repeating lamination of the slices to perform shaping, the supporting material SA is provided, on an outer surface thereof, with a supporting shell SS made of a material different from that of the supporting material SA, and the supporting shell SS may be made of a material having higher rigidity than that of the supporting material SA. Accordingly, by providing, as an outer shell of the supporting material, the supporting shell having higher rigidity than that of the supporting material, it is possible to attain the inconsistent properties of being easily removed after shaping and being rigid during shaping, which are required for the supporting material. That is, it is possible to prevent outflows of the supporting material with the supporting shell during the shaping, and also, it is possible to cause outflows of the supporting material coated with the supporting shell after the shaping, which enables the supporting material to be easily removed from the model material.

According to the embodiment of the present invention as defined in claim 1, in the three-dimensional shaping apparatus, the supporting shell SS is partially provided with an exposed portion at which the supporting material SA is exposed. Accordingly, the supporting shell can be easily stripped off from the shaped object, by breaking the supporting shell at the exposed portion after the shaping for the shaped object, by immersing the shaped object into water for causing the supporting material to dissolve through the exposed portion, or the like.

Further, according to another embodiment, in the three-dimensional shaping apparatus, the supporting material SA may be made of a water-soluble material. Accordingly, the supporting material can be dissolved and removed extremely easily, by immersing the shaped object into water in a water bath or the like, after the shaping.

Further, according to yet another embodiment, in the three-dimensional shaping apparatus, the supporting shell SS may be made of an identical material as that of the model material MA, Accordingly, the supporting shell may be formed concurrently with the shaping of the model material, which eliminates the necessity of additionally preparing a different shaping material, and whereby the number of processes can be reduced. Further, by using the common shaping material, the fabrication cost can also be reduced.

Further, according to yet another embodiment, in the three-dimensional shaping apparatus, the control device may be adapted to control the shaping-material ejection device such that the model material MA is ejected and cured at positions at which the supporting shell SS is to be formed on the outer surface of the supporting material SA, and the outer surface of the supporting material SA is covered with the model material MA having a small thickness, during the formation of the respective slices. Accordingly, the model material having a small thickness can be formed on the surface of the supporting material, thereby offering the advantage of ease of formation of the supporting shell.

Further, according to yet another embodiment, in the three-dimensional shaping apparatus, the exposed portion may include a plurality of holes 53 formed in a surface of the supporting shell SS. Accordingly, the supporting material can be dissolved through the holes by immersing the shaped object into water after the shaping.

Further, according yet another embodiment, in the three-dimensional shaping apparatus, the exposed portion may include a cutout line shape 51 formed from a partial opening provided straightly in a surface of the supporting shell SS. Accordingly, the supporting shell can be easily broken along the cutout line with a hand.

Further, according to yet another embodiment, in the three-dimensional shaping apparatus, the supporting shell SS may include small pieces 54 having a certain size which are arranged so as to be spaced apart from one another, whereby exposed portions are formed between the small pieces 54. Accordingly, if the shaped object is immersed into water after the shaping, the supporting material is dissolved through the exposed portions, and the supporting shell is finely disassembled into small pieces, whereby a larger part of the supporting material will be exposed. This offers the advantage that the supporting material can be removed more easily and within a shorter time.

Further, according to yet another embodiment, in the three-dimensional shaping apparatus, the supporting shell SS may be partially provided with a slot portion having a reduced thickness. This makes it easier to break the supporting shell at the slot portion having the reduced thickness after the shaping for the shaped object. Particularly, since the supporting material is prevented from being directly exposed to the outside, it is possible to prevent the supporting material from contacting with air, thereby offering the advantages of preventing deliquescence thereof and preventing outflows of the supporting material through an exposed portion.

Further, according to yet another embodiment, in the three-dimensional shaping apparatus, the supporting shell SS may be formed so as to be spaced apart from a shaped object formed from the shaped model material MA for preventing contact therebetween. Accordingly, portions at which the model material and the supporting shell are shaped continuously can be eliminated, which prevents partial breakages of the model material in the shaped object, when the supporting shell is stripped off from the supporting material. This enables the model material to be smoothly removed, and the shaped object having higher quality can be provided.

Further, according to yet another embodiment, in the three-dimensional shaping apparatus, the supporting shell SS may be formed to have a shape resulted from simplifying an outer shape of the shaped object, and the supporting material SA may be charged between the supporting shell SS and the model material MA. Accordingly, when the shaped object has a complicated outer shape, the supporting shell can be formed such that it is not along the complicated outer shape, which offers the advantage of facilitation of the removal of the supporting shell therefrom.

Further, according to yet another embodiment, in the three-dimensional shaping apparatus, the slices may be such that the positions at which the supporting shell SS is formed are located at peripheries outside the model material MA forming the shaped object. Accordingly, the shaped object can be formed such that it has intermittent portions in the horizontal direction at which the supporting shell is not formed on the supporting material, and thus, the supporting material is exposed. This can prevent the supporting shell from being bonded to the shaped object, thereby facilitating the removal of the supporting shell and protecting the shaped object.

Further, according to yet another embodiment, in the three-dimensional shaping apparatus, the slices may include a slice which is not provided with the supporting shell on the surface of the supporting material SA. This enables forming the shaped object such that it has intermittent portions in the height direction at which the supporting shell is not formed on the supporting material, and thus, the supporting material is exposed. This can prevent the supporting shell from being bonded to the shaped object, thereby facilitating the removal of the supporting shell and protecting the shaped object.

Further, according to yet another embodiment, in the three-dimensional shaping apparatus, the supporting shell SS cannot be provided on the outer surface of the supporting material SA at a portion where its angle abruptly changes. Accordingly, the supporting shell is not formed at edge portions, which facilitates breaking of the supporting shell with hands.

Furthermore, a three-dimensional shaping method according to yet another embodiment, as defined in claim 14, is a three-dimensional shaping method for repeatedly performing operations for ejecting, onto a shaping plate 40, a model material MA and a supporting material SA as shaping materials while performing scanning at least in a single direction, and for curing the materials to form slices with a predetermined thickness in a height direction, and laminating the slices in the height direction for performing shaping, the model material MA being to form a final shaped object, and the supporting material SA being to support a protruding portion of the model material MA and to be finally removed, the three-dimensional shaping method including the steps of: reciprocatingly scanning, in a single direction, a head portion 20 including a shaping-material ejection device for ejecting the model material MA and/or the supporting material SA onto the shaping plate 40 and further including the curing device 24 for curing the model material MA and the supporting material SA, while causing the shaping-material ejection device to eject the model material MA and the supporting material SA onto the shaping plate 40 at least in one of forward and rearward paths of the reciprocating scanning, and further causing the curing device 24 to cure the model material MA and/or the supporting material SA in the other of the forward and rearward paths, thereby forming slices; moving positions of the shaping plate 40 and the head portion 20 with respect to each other in the height direction, and repeating the lamination of the slices; wherein the steps of forming and laminating the slices may include providing, on an outer surface of the supporting material SA, a supporting shell SS made of a material having higher rigidity than that of the supporting material SA, and by partially providing the supporting shell (55) with an exposed portion at which the supporting material (SA) is exposed. Accordingly, by providing, as an outer shell of the supporting material, the supporting shell having higher rigidity than that of the supporting material, it is possible to attain the inconsistent properties of being easily removed after shaping and being rigid during shaping, which are required for the supporting material. That is, it is possible to prevent outflows of the supporting material with the supporting shell during the shaping, and also, it is possible to cause outflows of the supporting material coated with the supporting shell after the shaping, whereby the supporting material can be easily removed from the model material.

### BRIEF DESCRIPTION OF THE DRAWINGS

Fig. 1 is a block diagram illustrating a three-dimensional shaping apparatus in a first embodiment;
Fig. 2 is a block diagram illustrating a three-dimensional shaping apparatus in a modified example;
Fig. 3 is a plan view illustrating a state where a head portion is moved in XY directions;
Fig. 4 is a perspective view illustrating a shaped object formed by shaping a model material and a supporting material;
Fig. 5 is a cross-sectional view of Fig. 4 ;
Fig. 6 is a perspective view illustrating an example where a supporting shell is provided with cutout lines;
Fig. 7 is a perspective view illustrating an example where the supporting shell is provided with cutout portions;
Fig. 8 is a perspective view illustrating an example where the supporting shell is provided with a plurality of holes;
Fig. 9 is a perspective view illustrating an example where the supporting shell is constituted by a plurality of small pieces;
Fig. 10 is a cross-sectional view illustrating an example where no supporting shell is provided on the surface of the supporting material;
Fig. 11 is a cross-sectional view illustrating an example where the supporting shell is provided on the surface of the supporting material of Fig. 10;
Fig. 12 is a cross-sectional view illustrating an example where the supporting shell is spaced apart from the model material in a horizontal direction;
Fig. 13 is a cross-sectional view illustrating an example where the supporting shell is spaced apart from the model material in a vertical direction;
Fig. 14A is a horizontal cross-sectional view illustrating an example where the supporting shell is provided along the surface shape of the model material, and Fig. 14B is a horizontal cross-sectional view illustrating an example where the supporting shell is provided by simplifying the surface shape of the model material;
Fig. 15 is a perspective view illustrating an external appearance of the head portion;
Fig. 16 is a plan view illustrating a state where the head portion in Fig. 15 is ejecting a shaping material; and
Fig. 17 is a perspective view illustrating a state where a roller portion is removing an excess portion of the shaping material.

### DETAILED DESCRIPTION OF PREFERRED EMBODIMENTS

Hereinafter, embodiments of the present invention will be described, with reference to the drawings. However, the embodiments which will be described below merely illustrate a three-dimensional shaping apparatus and a three-dimensional shaping method for realizing the technical concepts of the present invention, and the three-dimensional shaping apparatus and the three-dimensional shaping method according to the present invention are not intended to be restricted to those which will be described later.

Further, the present specification is not intended to restrict the components defined in the claims to members according to the embodiments. Particularly, the sizes, the materials and the shapes of components described in the embodiments, the placement of them relative to one another, and the like are not intended to restrict the scope of the present invention thereto and are merely illustrated as examples, unless otherwise specified. Further, the sizes of members, the positional relationships thereamong and the like are exaggeratedly illustrated in the drawings, in some cases, for clarification of the description. Further, in the following description, like names and like reference characters are used to denote the same members or members with the same qualities, and detailed descriptions thereof will be properly omitted. Further, the respective components constituting the present invention may be realized, such that a single member constitutes a plurality of components so that the single member can function as the plurality of components, or such that a plurality of members share the functions of a single member.

The three-dimensional shaping apparatus employed in embodiments of the present invention is electrically, magnetically or optically connected to a computer, a printer, an external storage device and other peripheral apparatuses for performing manipulations, control, displaying and other processes, through serial connections or parallel connections using IEEE1394, RS-232x, RS-422, RS-423, RS-485, USBs and the like or through networks using 10BASE-T, 100BASE-TX, 1000BASE-T and the like, thereby enabling communication therebetween. These connections therebetween are not limited to physical connections in a wired manner, but may also be wireless connections and the like using radio waves, infrared rays, optical communications and the like, such as Bluetooth (registered trademark), wireless LAN using IEEE802.1x, and the like. Further, as recording mediums for exchange of data, storage of settings and the like, it is possible to employ memory cards, magnetic disks, optical disks, magnet-optical disks, semiconductor memories and the like. Further, in the present specification, the term "the three-dimensional shaping apparatus" is used not only to mean the main body of the three-dimensional shaping apparatus, but also to mean a three-dimensional shaping system including, in combination therewith, peripheral apparatuses such as a computer, an external storage device.

Further, in the present specification, the three-dimensional shaping apparatus, the three-dimensional shaping method and three-dimensional shaping programs are not intended to be restricted to systems themselves for performing three-dimensional shaping, and apparatuses and methods which are adapted to perform, in a hardware manner, inputting, outputting, displaying, calculations, communications and other processes relating to image formation. Apparatuses and methods adapted to realize such processes in a software manner are also included in the scope of the present invention. For example, it is possible to provide an apparatus and a system enabled to perform image formation and processes relating thereto, by incorporating, into a general-purpose circuit or a computer, software, programs, plug-ins, objects, libraries, applets, compilers, modules, macros capable of operating in certain programs, and such an apparatus and system also correspond to the three-dimensional shaping apparatus, the three-dimensional shaping method, the three-dimensional shaping program and a computer-readable recording medium, according to the present invention. In the present specification, the term "computer" includes workstations, terminals, portable electronic apparatuses, cellular phones using PDC, CDMA, WCDMA, FOMA (registered trademark), GSM and IMT2000 or 4th generation cellular phones, PHSs, PDAs, pagers, smartphones and other electronic devices, as well as general-purpose or dedicated computers. Further, in the present specification, "programs" are not limited to those used solely, and such programs can be used in aspects where they function as portions of certain computer programs, software, services and the like, aspects where they function by being called as required, aspects where they are provided as services in OSs or other environments, aspects where they operate by being resident in environments or aspects where they operate in backgrounds. Also, such programs can be used as other supporting programs.

### (First Embodiment)

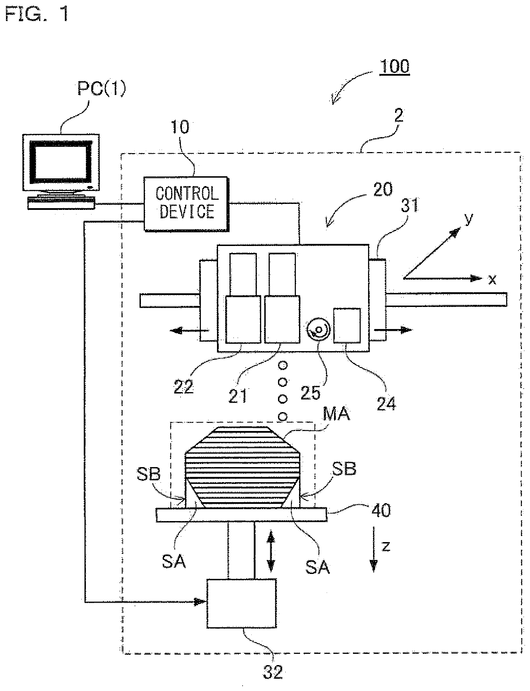

Fig. 1 illustrates a block diagram of a three-dimensional shaping system 100 according to a first embodiment of the present invention. The three-dimensional shaping system 100 is adapted to eject shaping materials in a liquid or fluid state in an ink-jet manner, and then, cure and laminate the materials for fabricating an arbitrary shaped object. As such shaping materials, a model material MA and a supporting material SA are employed, wherein the model material MA is to form a final shaped object, and the supporting material SA is shaped to support protruding portions of the model material MA and is to be finally removed therefrom.

The three-dimensional shaping system 100 illustrated in Fig. 1 is constituted by a three-dimensional shaping apparatus 2, and a set-data creating apparatus 1 (a computer PC in Fig. 1) which transmits set data to the three-dimensional shaping apparatus 2. The three-dimensional shaping apparatus 2 includes a control device 10, a head portion 20, and a shaping plate 40.

The head portion 20 includes, as shaping-material ejection devices, model-material ejection nozzles 21 for ejecting the model material MA and supporting-material ejection nozzles 22 for ejecting the support material SA. The head portion 20 is provided with a roller portion 25 for scraping off excess portions of these ejected shaping materials for smoothing the surfaces of the shaping materials, and further, is provided with a curing device 24 for curing the shaping materials. Further, in order to cause the model-material ejection nozzles 21 and the supporting-material ejection nozzles 22 to eject, in an ink-jet manner, the shaping materials in a liquid or fluid state to proper positions on the shaping plate 40, there are provided an XY direction driving portion 31 and a Z-direction driving portion 32, as a horizontal driving device and a vertical driving device, respectively, wherein the horizontal driving device is for scanning the head portion 20 in horizontal directions, in such a way as to reciprocatingly scan it in an X direction and also to scan it in a Y direction orthogonal to the X direction, while the vertical driving device is for moving the positions of the head portion 20 and the shaping plate 40 with respect to each other in the height direction.

The computer PC functions as the set-data creating apparatus 1. On receiving, from outside, an input of a three-dimensional to-be-shaped object, such as an input of model data designed through a three-dimensional CAD and the like, the set-data creating apparatus 1 converts this CAD data into STL data (Stereo Lithography Data), for example, further creates cross-section data provided by slicing the STL data into a plurality of thin cross-sectional parts, and then transmits the slice data to the three-dimensional shaping apparatus 2 collectively or on a slice-layer by slice-layer basis. At this time, according to a determined attitude, on the shaping plate 40, of the model data designed through the three-dimensional CAD and the like (actually, the STL data resulted from the conversion), regarding portions or spaces in which the model made of the model material at this attitude is required to be supported, the positions at which the support material SA should be provided are determined, and based on these data, slice data corresponding to respective layers is created. The control device 10 takes the cross-section data from the computer PC and controls the head portion 20, the XY-direction driving portion 31, and the Z-direction driving portion 32 according to this data. Under the control by the control device 10, the XY-direction driving portion 31 is operated, and also, the model-material ejection nozzles 21 and the supporting-material ejection nozzles 22 in the head portion 20 are caused to eject, as droplets, the model material MA and the supporting material SA as shaping materials, to proper positions on the shaping plate 40, so that a cross-sectional shape is formed based on the cross-section data provided by the computer PC. Further, the model material MA, which is one of the shaping materials ejected on the shaping plate 40, is at least cured, so that the model material MA is changed from the liquid or fluid state to a solid, and thus, is cured. Through such operations, a cross-sectional member corresponding to a single layer, namely a slice, is created.

### (Slice)

Herein, "slice" refers to a unit for laminating layers in the z direction of the shaped object, and the number of slices is equal to the value of the height divided by the thickness of a single laminated layer. Actually, regarding requirements for the determination of the thickness of each slice, a minimum settable thickness is determined, according to the minimum unit amounts of materials which can be ejected from the respective ejection nozzles, variations caused by eccentricity of the roller in the roller portion 25 in the upward and downward directions, and the like. A value determined based on the aforementioned view points is defined as the minimum slice value, and thereafter, a user can finally determine the amount of each slice, in view of the required shaping accuracy and the required shaping speed, for example. That is, if the user selects prioritizing the shaping accuracy, the aforementioned minimum slice value or a value close thereto is determined as the amount of each slice. On the other hand, if the user prioritizes the shaping speed, the amount of each slice can be determined in such a way as to maintain a minimum necessary shaping accuracy. Further, as other methods, it is possible to employ a method which causes the user to sensuously select a ratio between the shaping accuracy and the shaping speed, or a method which causes the user to input a permissible maximum shaping time, thus displays some combinations of shaping times and shaping accuracies as candidates, and further causes the user to select a preferred condition out of these candidates.

Further, shaping actions for one slice data includes a series of steps of ejecting the shaping materials in a liquid or fluid state from the model-material ejection nozzles 21 and the supporting-material ejection nozzles 22 in an ink-jet manner at least in forward paths or rearward paths at least during reciprocating operations of the head portion 20 in the X direction, further causing the roller portion 25 to work for smoothing the surfaces of the uncured shaped object at least in forward paths or rearward paths in a state where the shaped object resulted from the ejection onto the shaping plate 40 has not been cured, and then directing light with a specific wavelength from the curing device 24 to the smoothed surfaces of the shaped object for curing the shaped object, wherein these series of steps are performed at least once, but it goes without saying that the number of times these steps are performed are automatically changed according to the thickness indicated by the slice data and the required shaping accuracy.

On the other hand, the maximum thickness which can be formed on the shaping plate through a single ejection from the model-material ejection nozzles 21 and the support-material ejection nozzles 22 at least in a forward or rearward path is determined by a unit amount of ejection which can maintain the cross-sectional shapes of ejected liquid droplets at substantially-circular shapes, after the liquid droplets have been landed thereon.

### (Shaping Plate 40)

The shaping plate 40 can be raised and lowered by the Z-direction driving portion 32. After a single slice has been formed, the control device 10 controls the Z-direction driving portion 32 in such a way as to lower the shaping plate 40 by a distance corresponding to the thickness of the single slice. Further, operations same as the above are repeatedly performed, so that new slices are laminated on the upper side (the upper surface) of the first single slice. Thus, a plurality of thin slices are successively created and laminated as described above, thereby attaining shaping for a shaped object.

Further, in cases where the shaped object has a protrusion, that is, a so-called overhang shape, the computer PC adds an overhang-supporting-portion shape thereto as required, when the computer PC converts the shaped object into data. Further, the control device 10 performs shaping of an overhang supporting portion SB based on the overhang-supporting-portion shape, at the same time as the shaping of the model material MA which is to form the final shaped object. More specifically, the supporting material SA, which is different from the model material MA, is ejected as droplets from the supporting-material ejection nozzles 22 to form the overhang supporting portion SB. After the shaping, the supporting material SA forming the overhang supporting portion SB is removed, thereby providing a targeted three-dimensional shaped object.

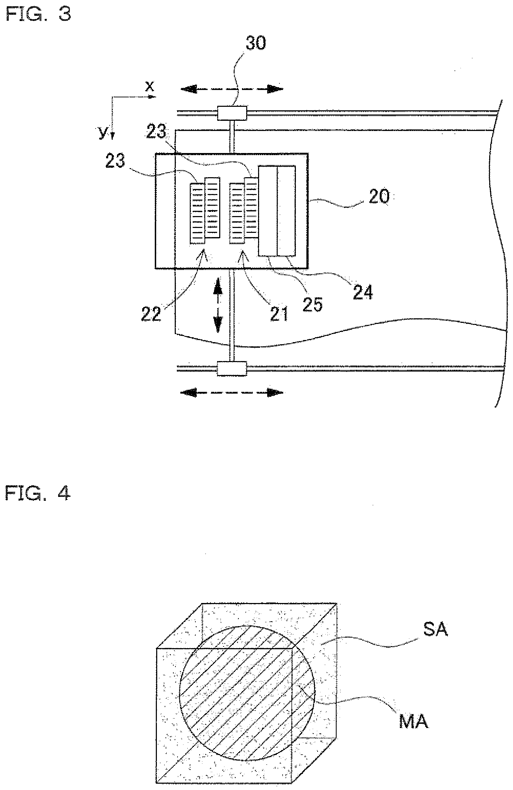

The head portion 20 is moved by a head moving device 30 in horizontal directions, namely in XY directions, as illustrated in a plan view in Fig. 3. Further, the shaping plate 40 is moved in the height direction, namely in the Z direction, by the plate raising/lowering device (the Z-direction driving portion 32), as illustrated in Fig. 1. Accordingly, the heights of the head portion 20 and the shaping plate 40 can be changed with respect to each other, thereby enabling stereoscopic shaping. More specifically, in order to eject, to proper portions, the model material MA and the supporting material SA as shaping materials from the model-material ejection nozzles 21 and the supporting-material ejection nozzles 22, at first, the head portion 20 is reciprocatingly operated in the X direction by the head moving device 30, and then, the model material MA and the supporting material SA are ejected from a plurality of orifices which are provided in the ejection nozzles 21 and 22 and extended in the Y direction. Further, as illustrated in Fig. 3, in cases where the widths of the ejection nozzles 21 and 22 in the Y direction are smaller than the width in the Y direction over which shaping can be performed on the shaping plate 40, and also, the width in the Y direction which is indicated by the shaping model data is larger than the entire length of the orifices extending in the Y direction, the respective ejection nozzles 21 and 22 are reciprocatingly operated in the X direction at predetermined positions, thereafter the respective ejection nozzles 21 and 22 are shifted by a predetermined amount in the Y direction and then are reciprocatingly scanned at these positions, and also, the model material MA and the supporting material SA are ejected to proper portions based on the slice data. These operations are repeated for creating a shaped object corresponding to all the set shaping data.

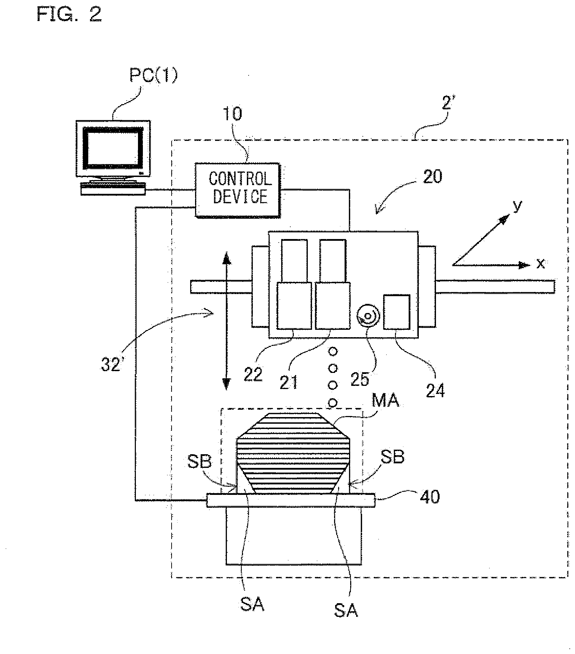

While, in the example of Fig. 1, the plate raising/lowering device for raising and lowering the shaping plate 40 is employed as the Z-direction driving portion 32, the present invention is not limited to this example, and as in a three-dimensional shaping apparatus 2' illustrated in Fig. 2, it is also possible to employ a Z-direction driving portion 32' for moving the head portion in the Z direction, while the plate 40 is fixed in the height direction. Further, movements in the XY directions can be also attained by moving the shaping plate while fixing the head portion. It is possible to eliminate the necessity of shifting of the head portion 20 in the Y direction as described above, by making the widths of the respective nozzles substantially equal to the width in the Y direction over which shaping can be performed on the shaping plate 40. However, even in such cases, in order to increase the resolution in the Y direction for the shaped object, which is determined by the intervals between the orifices provided in the nozzles, for example, it is possible to shift the head portion 20 in the Y direction, such that each orifice is positioned between the positions of orifices during the previous shaping.

### (Control Device 10)

The control device 10 controls the pattern of ejections of the shaping materials. That is, the control device 10 causes the shaping-material ejection device to eject the model material MA and the supporting material SA onto the shaping plate 40 at least in one of forward and rearward paths, during reciprocating scanning in the X direction, while reciprocatingly scanning the head portion 20 in a single direction, and further, causing the curing device 24 to cure the model material MA and the supporting material SA at least in one of the forward and rearward paths after the shaping-material ejecting device has ejected the shaping materials onto the shaping plate, thereby creating slices. Further, the control device 10 moves the positions of the shaping plate 40 and the head portion 20 with respect to each other in the height direction, and further, repeats laminating of slices to attain shaping. Further, as will be described later in detail, the smoothing of the surfaces of the shaping materials by the roller portion 25 is performed at least in one of forward and rearward paths, after the shaping-material ejection device has ejected the shaping materials onto the shaping plate, but before the curing device 24 cures the surfaces of the shaping materials.

Through a single reciprocating scanning, the control device 10 ejects any one shaping material out of the model material MA and the supporting material SA, smoothens the surface of the shaping material with the roller portion 25, and further cures it with the curing device 24. Through the next and subsequent reciprocating scannings, the control device 10 ejects the other shaping material which has not been ejected, smoothens the surface of the shaping material, and cures it. These series of processes are performed at least once for forming a single slice. As a matter of course, the present invention includes repeating, a plurality of times, the aforementioned series of processes corresponding to slice data for a single layer, according to the shaping time period and the final model surface accuracy required by the user, for example. Accordingly, the surface of any one of the model material MA and the supporting material SA can be smoothed in an uncured state, then cured, and thereafter, the other of the model material MA and the supporting material SA is ejected. This enables the model material MA and the supporting material SA to be individually cured, thereby offering the advantage of effective prevention of mixture of the model material MA and the supporting material SA at the boundary therebetween.

### (Shaping Material)

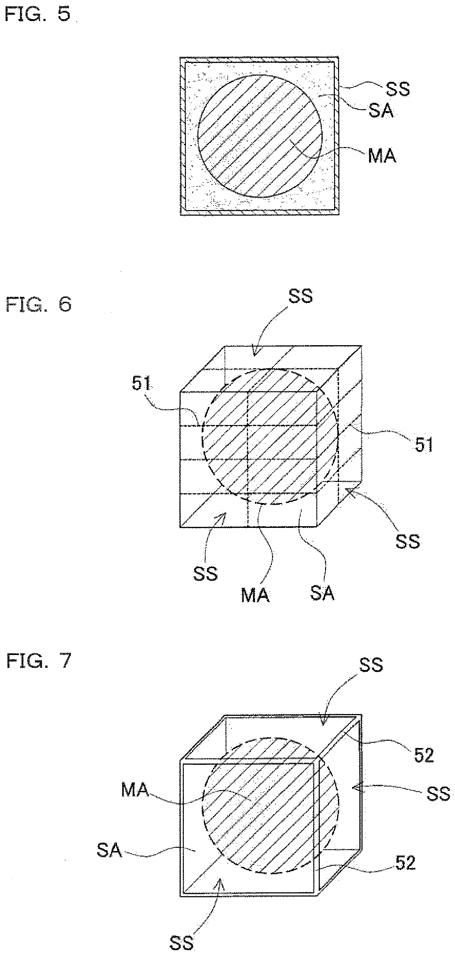

As described above, as shaping materials, a model material MA and a supporting material SA are employed, wherein the model material MA is to form a final shaped object, and the supporting material SA is to support protruding portions of the model material MA and to be removed finally. Fig. 4 illustrates a perspective view of a shaped object formed by shaping a spherical-shaped model material MA in such a way as to cover its periphery with a rectangular-parallelepiped supporting material SA. Fig. 5 illustrates a cross-sectional view of the same.

### (Curing Device 24)

As the model material MA, it is possible to employ a photo-curing resin, such as an UV curing resin. In this case, the curing device 24 is a light emitting device capable of emitting light containing at least a specific wavelength which causes the material of the model material MA to be cured in reaction thereto and, for example, the curing device 24 is an ultraviolet-ray emitting device such as an UV lamp. As such an UV light lamp, it is possible to employ a halogen lamp, a mercury lamp, an LED and the like. Further, in this example, the supporting material is also formed from an UV curing resin. In cases of employing an UV curing resin which can be cured by UV rays having the same wavelength, it is possible to employ the same ultraviolet-ray emitting device, thereby offering the advantage of utilization of a common light source. Also, in cases of employing a thermosetting resin as the model material, it is possible to employ a cooling device capable of generating a cooling gas, as the curing device 24.

### (Model Material MA)

Further, as the model material MA, it is possible to employ a thermoplastic resin. In this case, a cooling device is employed as the curing device 24. Further, in cases of employing thermoplastic resins as both the model material and the supporting material, by employing, as the model material, one having a melting point higher than the melting point of the supporting material, it is possible to remove the supporting material through melting, by heating the shaped object after the completion of layer laminations to a temperature higher than the melting point of the supporting material and lower than the melting point of the model material, and then maintaining the temperature thereof. Also, it is possible to employ a photo-curing resin as one of the model material and the supporting material, while employing a thermoplastic resin as the other of the model material and the supporting material.

Alternatively, it is possible to employ, as the model material, a material which can be cured by chemically reacting with a curing material. Further, it is also possible to mix a liquid modifier agent into the model material as required, in order to adjust its injection characteristics, such as its viscosity and surface tension. Further, its injection characteristics can be changed, through temperature adjustments. Other exemplary model materials include UV photopolymers, epoxy resins, acrylic resins and urethanes.

### (Supporting Material SA)

As the supporting material SA, it is possible to employ a water-swellable gel, wax, a thermoplastic resin, a water-soluble material, a meltable material and the like, as a removable material. For removing the supporting material SA, it is possible to employ appropriate methods, for example, dynamic cleanings such as solution with water, heating, chemical reactions and hydraulic cleaning, separations utilizing thermal expansion differences through melting by irradiation of electromagnetic waves, according to properties of the supporting material.

Since the supporting material is finally removed, it is required to exhibit a property of being easily removed. For example, after the completion of the shaping for the shaped object, the water-soluble supporting material can be put into a water bath to be dissolved and removed. On the other hand, when the supporting material has higher solubility, the supporting material has a lower strength, and thus, when humidity is high, the supporting material is prone to deliquesce to lose its shape, drop and the like. If the supporting material has insufficient rigidity, its ability to support the model material is degraded, which may make it hard to shape the model material on the upper surface of the supporting material, thereby degrading the accuracy of the model material. On the other hand, if the supporting material has increased rigidity, this increases the difficulty of dissolving the supporting material into water, thereby necessitating a longer time for removing it, when the supporting material is removed from the final shaped object. Since the supporting material is required to exhibit inconsistent properties as described above, it has been conventionally difficult to provide a supporting material capable of exhibiting optimum properties.

To cope therewith, in cases of employing a water-soluble material as the supporting material, as in the present embodiment, it is possible to form a supporting shell SS as an outer shell of the supporting material SA, which can inhibit the supporting material from directly contacting with air as much as possible during shaping of the model with the shaping apparatus, thereby inhibiting the supporting material from absorbing moisture in air. This prevents deformations of the supporting material, and also, prevents deformations of the model material due to deformations of the supporting material, during shaping. Further, by forming the supporting shell SS, it is possible to inhibit the supporting material inside thereof from absorbing the moisture in the air, which can improve the water-solubility performance of the supporting material. As a result, it is possible to increase the speed of dissolution of the supporting material, when the supporting material is immersed into a solution such as water for removal thereof. With this structure, it is possible to enable the supporting material to have sufficient rigidity, while increasing the speed of dissolution thereof since the supporting shell SS as the outermost shell is broken during removal thereof, thereby offering the advantage of reduction of the time period required for removal of the supporting material. In the examples of Figs. 4 and 5, the supporting shell SS formed on the surfaces of the rectangular parallelepiped shape is broken, in order to remove the supporting material SA inside thereof.

### (Details of Supporting Material SA)

The supporting material SA contains a non-curable ingredient. Particularly, by enhancing the solubility thereof, it is possible to dissolve and remove the supporting material within a shorter time, by introducing it in a water bath. The solubility of the supporting material is not limited to water solubility and can also be solubility to a certain solvent. On the other hand, such a supporting material is in a liquid state or a gel state, and thus, becomes sticky or slimy when being touched by hands. Therefore, such a supporting material tends to be contaminated. To cope therewith, the supporting shell SS is provided on the surface of the supporting material as described above, in order to protect it.

### (Supporting Shell SS)

The supporting shell SS provided on the outer surface of the supporting material SA is formed from the model material MA having higher rigidity than that of the supporting material SA. This can cause the supporting material SA to have higher rigidity at its surface, which prevents outflows of the supporting material SA. In the present embodiment, since the supporting shell SS is formed from the model material MA ejected from the model-material ejection nozzles 21, the model-material ejection nozzles 21 in the head portion 20 can be commonly utilized as ejection nozzles for the supporting shell SS, and also, shaping of the supporting shell SS on the supporting material SA can be performed concurrently with the shaping of the model material MA. This offers advantages in terms of the cost and the speed. More specifically, at the time of creating three-dimensional shaping data for at least the model material MA and the supporting material SA, this shaping data is created, regarding the positions at which the outer surface is to be formed from the supporting material in the shaping data, in such a way as to automatically change the supporting material positioned at the outer surface to the model material or in such a way as to form a thin-film layer made of the model material to cover the outer surface of the supporting material. Further, the control device 10 controls the shaping-material ejection device, such that the model material MA is ejected and cured at the positions at which the supporting shell SS is to be formed on the outer surface of the supporting material SA, and the outer surface of the supporting material SA is covered with the model material MA having a small thickness, during formation of the respective slices corresponding to the created data. Thus, the model material MA with such a small thickness is formed on the surface of the supporting material SA, which offers the advantage of ease of formation of the supporting shell SS.

Further, regarding the thickness of the thin film made of this model material, it is considered that the thickness thereof is preferably about 0.1 mm to 5 mm, in view of the balance between the ease of removal and the securement of the strength. Further, while, in the present embodiment, the supporting shell SS is made of the model material MA ejected from the model-material ejection nozzles 21, it is also possible to form a supporting shell using additionally-provided nozzles for ejecting a material different from the model material MA, provided that this material exhibits appropriate characteristics as the supporting shell.

In this case, regarding the characteristics of the material of the supporting shell, the material of the supporting shell is preferably a material having higher hardness than that of the model material MA and also having lower tenacity than that of the model material MA, in view of striking a higher-degree balance between the ease of removal and the securement of the strength.

### (Structure for Separating Supporting Shell SS)

On the other hand, with the structure which provides the supporting shell SS on the supporting material SA, the higher the rigidity of the supporting shell SS, the higher the difficulty of stripping off the supporting shell SS from the shaping material. Therefore, it is preferable to additionally provide a structure for facilitating the stripping off of the supporting shell SS therefrom. More specifically, the surface of the supporting material SA is not entirely covered with the supporting shell SS, and an exposed portion which partially exposes the supporting material SA is provided.

This makes it easier to break the supporting shell SS at the exposed portion after shaping of the shaped object. Further, when the supporting material SA has solubility, it is possible to dissolve the supporting material SA through the exposed portion, by immersing it in a liquid, after shaping of the shaped object. This enables stripping off the supporting shell SS from the shaped object without breaking it, thereby offering the advantage of labor saving in operations for removing the supporting material SA. Also, it is possible to shape the continuous outer surface on which the supporting shell SS should be formed, such that only the outer peripheral portions of this continuous outer shape have a larger thickness than those of the other portions of the outer surface on which the supporting shell SS should be formed, in order to make it easier to integrally strip off the continuous outer surface on which the supporting shell SS is formed.

### (Exposed Portion)

Such an exposed portion can be implemented in various aspects. For example, in an example illustrated in Fig. 6, an exposed portion is realized by cutout line shapes 51 formed from partial openings provided straightly in the surface of the supporting shell SS. This structure makes it easier to break the supporting shell SS, with a hand, along the cutout line shapes 51. Further, as illustrated in Fig. 7, it is also possible to form cutout portions 52 at which the supporting shell SS is not provided, at portions where the outer surface largely changes its angle, such as edge portions of the supporting material SA. This also enables easily stripping off the supporting shell SS with hands. Furthermore, by immersing, into a liquid, shaped objects provided with such cutout line shapes 51 or cutout portions 52 as described above, it is possible to cause outflows of the supporting material SA through the gaps in these cutout line shapes 51 or cutout portions 52 provided in the supporting shell SS, which enables naturally removing the supporting material SA.

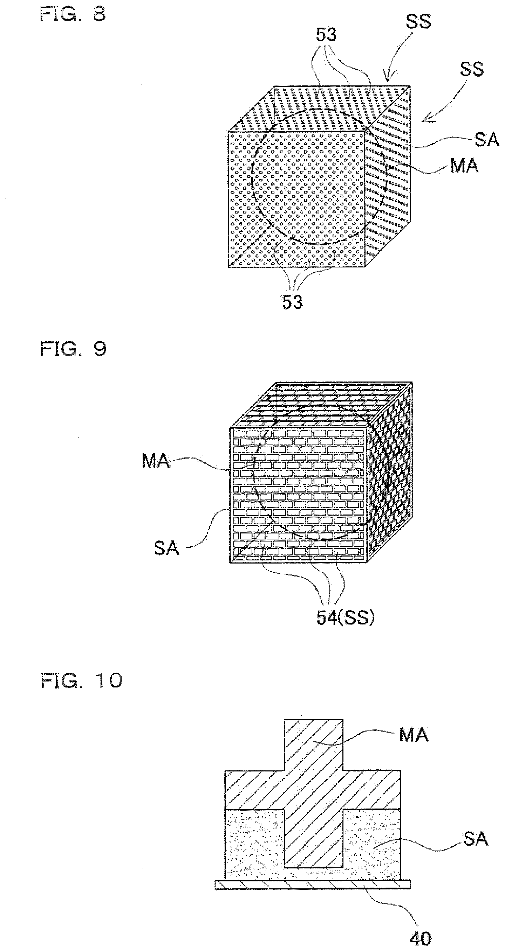

Further, as another aspect of the exposed portion, as illustrated in Fig. 8, a plurality of holes 53 can be formed in the surface of the supporting shell SS. By forming such a plurality of holes 53, water is caused to intrude into the inside of the supporting shell SS over larger areas, which facilitates dissolution of the supporting material SA. It is preferable to provide such holes 53 uniformly in the surface of the supporting shell SS.

Further, as yet another aspect of the exposed portion, as illustrated in Fig. 9, the supporting shell SS can be divided into a plurality of small pieces 54, and these small pieces 54 can be arranged so as to be spaced from one another, thereby providing exposed portions between the small pieces 54. With this structure, the exposed portions are formed in the surface of the supporting shell SS more uniformly, and therefore, when the shaped object is immersed into water, the supporting material SA can be effectively dissolved.

When the supporting material SA is dissolved, the supporting shell SS is finely disassembled into small pieces 54, thereby exposing a larger part of the supporting material SA. In addition, since the supporting shell SS is disassembled, the model material MA inside thereof can be extracted therefrom, which eliminates the necessity of breaking the supporting shell SS, thereby offering the advantage that the supporting material can be removed more easily and within a shorter time.

It goes without saying that two or more of the aforementioned various aspects of the exposed portion can be combined.

Further, instead of the structure for forming the exposed portion or in addition thereto, it is also possible to form a slot portion by partially reducing the thickness of the supporting shell. This structure makes it easier to break the supporting shell at the slot portion having such a reduced thickness. Further, since the supporting material is prevented from being directly exposed to the outside, it is possible to prevent the supporting material from contacting with external air, thereby offering the advantages of prevention of deliquescence thereof due to higher humidity and prevention of dropping of the supporting material through an exposed portion.

When the supporting shell SS is formed, such an exposed portion or slot portion can be easily formed, by partially preventing the ejection for the supporting shell SS or by limiting the amount of the ejection therefor.

Further, by providing, if possible, such an exposed portion in the upper surface of the supporting material SA in a state where the model material MA is placed on the shaping plate 40, it is possible to prevent leakage of the supporting material SA which has deliquesced, through the exposed portion, which is preferable.

### (Structure for Spacing Supporting Shell SS)

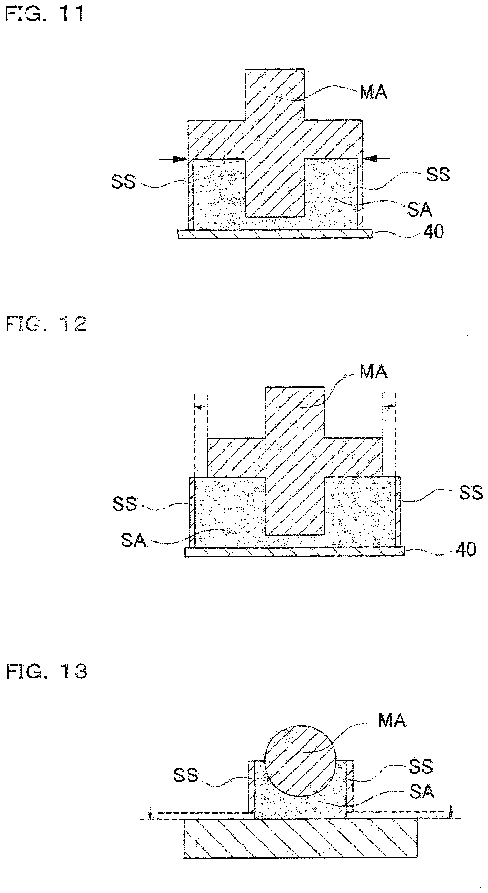

Since the supporting shell SS is finally removed, it is necessary to take caution not to break the shaped object formed by shaping the model material MA, when the supporting shell SS is stripped off therefrom. If the supporting shell is bonded to the model material, the model material may be partially broken at the time of stripping off the supporting shell therefrom. Particularly, when the supporting shell is made of the same material as that of the model material, the supporting shell may be possibly shaped, such that it is continuous to the model material. For example, in shaping the model material MA as illustrated in Fig. 10, if an attempt is made to form a supporting shell SS on the side surfaces of the supporting material SA, the supporting shell SS is formed such that its upper ends contact with the model material MA, as illustrated in Fig. 11. In this case, if an attempt is made to strip off the supporting shell therefrom, the model material may be partially broken at portions indicated by arrows.

To cope therewith, in the present embodiment, at the time of shaping the supporting shell, the shaping thereof is controlled, in such a way as to form the supporting shell such that the supporting shell is preliminarily spaced apart from the model material, in order to prevent contact therebetween.

### (Extension of Supporting Material SA)

More specifically, as illustrated in Fig. 12, during shaping of slices, the control device 10 performs control, such that the positions at which the supporting shell SS is formed are positioned at peripheries outside the model material MA forming the shaped object. In other words, the supporting material SA is extended in the horizontal direction, in order to have the outermost surfaces of the supporting material SA spaced apart from the outermost surfaces of the model material MA. In this manner, it is possible to prevent the supporting shell from contacting with the model material, which prevents the possibility of breakage thereof and also facilitates stripping off of the supporting shell.

Further, such extensions of the supporting material SA can be also performed in the vertical direction, as well as in the horizontal direction.

More specifically, in forming the model material MA as in Fig. 13, the supporting material SA can be extended in the downward direction, in order to prevent the model material MA at the lower side from coming into contact with the supporting shell SS on the supporting material SA laminated on the upper surface of the model material MA at the lower side. As a result, the supporting shell SS is spaced, at its lower ends, apart from the model material MA at the lower side, thereby protecting the model material MA and facilitating the removal of the supporting material SA.

Further, in this case, it is also possible to provide the same effect by reducing the height of the supporting shell, in other words, by not providing the supporting shell at the portion which comes into contact with the model material at the lower side, in addition to extending the supporting material in the vertical direction. In this case, it is possible to provide the advantage of reduction of the amount of the supporting material used therein. In any of the cases, the aforementioned spacing structure can be realized, by not providing the supporting shell on the lower surface of the supporting material, during shaping of slices. That is, by intermittently forming slices provided with no model material ejected on the outer edges of the supporting material, it is possible to form exposed portions in the surfaces of the supporting material, intermittently in the height direction.

Further, the shorter the distance by which the supporting material SA and the model material MA are spaced apart from each other, the more preferable. By making this distance shorter, it is possible to reduce the amount of the used supporting material. However, it is also possible to increase the distance, in cases of causing this distance to function as an exposed portion for facilitating the dissolution of the supporting material as described above. In consideration of thickness tolerances and the like in slice shaping, the supporting material is spaced apart from the model material by an amount corresponding to the thickness of about one to three slices, for example.

Further, this structure for spacing the supporting shell and the model material apart from each other is advantageous in terms of the facilitation of stripping off of the supporting shell as described above, as well as in terms of the protection of the model material. Since there is no need for breaking the supporting shell for separating it from the model material, it is possible to strip off the supporting shell with hands with smaller forces.

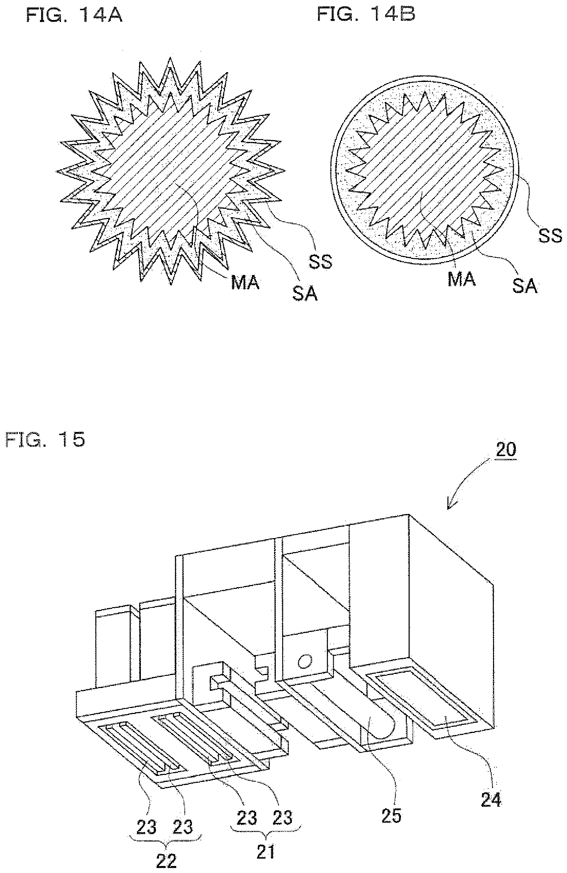

In addition, it is also possible to facilitate the separation of the supporting shell, by simplifying the shape of the supporting shell. For example, in cases of forming a model material MA having a shape with a plurality of protrusions at its surface as illustrated in a horizontal cross-sectional view in Fig. 14A, if an attempt is made to simply provide a supporting material SA along the surface shape of the model material MA, a plurality of protrusions will be similarly formed therein. If a supporting shell SS is added to the surface of this supporting material SA, the shape of the supporting shell SS will also become complicated. If an attempt is made to remove this with a hand, removal operations will be troublesome. To cope therewith, as illustrated in a horizontal cross-sectional view in Fig. 14B, it is possible to simplify the outer shape of the supporting material SA to deform it into a spherical shape, which can simplify the shape of the supporting shell SS formed on the surface of the supporting material SA, thereby facilitating operations for removing it with hands. Such a deformation of the supporting material SA can be attained by simplifying the outer shape of the model material MA, for example, by repeating processes for expanding or shrinking it through image processing. It is not always necessary to make the outer shape of the supporting material coincident with that of the outer surface of the model material which will form a final shaped object as described above, and the outer shape of the supporting material can be standardized into a certain simple shape, which makes it easier to strip off the supporting shell therefrom.

### (Head Portion 20)

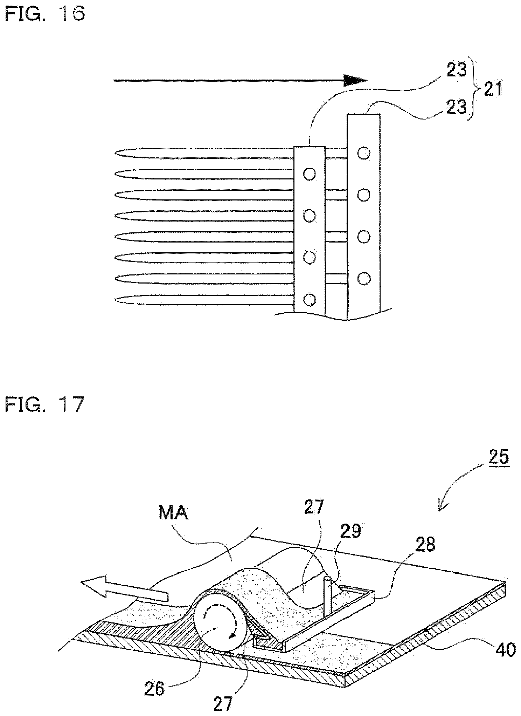

Fig. 15 illustrates an example of the head portion 20 in the ink-jet type three-dimensional shaping apparatus. The head portion 20 illustrated in the figure is provided with dedicated ejection nozzles for individually ejecting a model material MA and a supporting material SA, as shaping-material ejection devices. More specifically, the head portion 20 includes model-material ejection nozzles 21 for ejecting the model material MA and supporting-material ejection nozzles 22 for ejecting the supporting material SA, such that they are spaced apart from each other in parallel with each other. The ejection nozzles are both provided with two nozzle rows 23, and these nozzle rows 23 are placed so as to be deviated from each other by an amount corresponding to half a nozzle as illustrated in a plan view in Fig. 16, in order to increase the resolution. Further, in the model-material ejection nozzles 21 and in the supporting-material ejection nozzles 22, the respective nozzle rows 23 placed in the offset state are placed so as to be coincident with the same lines, so that the resolutions for the model material and the supporting material are made coincident with each other.

In the head portion 20, there are integrally provided the supporting-material ejection nozzles 22, the model-material ejection nozzles 21, the roller portion 25 and the curing device 24 in this order from the left side. Each of the ejection nozzles is adapted to eject an ink-type shaping material, in the way of a piezoelectric-device type ink-jet printing head. Further, the shaping material is adjusted to have such a viscosity that it can be ejected from the ejection nozzles.

In the example of Fig. 15, the head portion 20 is adapted to eject the model material MA at first, and thereafter, eject the supporting material SA. Further, the head portion 20 is adapted to eject the shaping materials in forward paths (in the left-to-right direction in the figure) and is adapted to cure the shaping materials with the curing device 24 in rearward paths (in the right-to-left direction in the figure).

### (Roller Portion 25)

The head portion 20 is further provided with the roller portion 25 for smoothing the surfaces of the shaping materials by pressing the surfaces of the ejected model material MA and the ejected supporting material SA in uncured states and by removing excess portions of the shaping materials. The states of operations of this roller portion 25 will be described, with reference to a schematic view of Fig. 17. In this example, there is illustrated a state where a roller main body 26 is smoothing the surface of an ejected model material MA in an uncured state. The roller portion 25 includes the roller main body 26 as a rotational member, a blade 27 placed to protrude toward the surface of the roller main body 26, a bath 28 for storing the shaping material scraped off by the blade 27, and a suction pipe 29 for discharging the shaping material stored in the bath 28. The roller main body 26 is rotated in the direction opposite from the direction of traveling of the head portion 20 (in the clockwise direction in Fig. 17), thereby scraping away the uncured shaping material. The shaping material having been scraped away adheres to the roller main body 26 and is transferred to the blade 27, and thereafter, is scraped off by the blade 27 and guided into the bath 28. Therefore, the blade 27 is fixed at an attitude inclined downwardly toward the bath 28. Further, the suction pipe 29 is connected to a pump and is adapted to suction the shaping material stored in the bath 28 and then discharge it. In this example, the roller main body 26 is made to have an outer shape with a diameter φ of about 20 mm and is adapted to have a rotational speed of about 10 rps.

The roller portion 25 is adapted to perform scraping when the head portion 20 travels in the right-to-left direction in the figure. In other words, when the model-material ejection nozzles 21 and the supporting-material ejection nozzles 22 are caused to eject the model material MA and the supporting material SA, respectively, to proper positions, based on slice data, while the head portion 20 travels in the left-to-right direction, the roller portion 25 does not come into contact with the shaping materials, and similarly, the curing device 24 does not perform irradiation from the light source. After at least the respective nozzles 21 and 22 are caused to eject the shaping materials, for example, in a forward path in the direction of left-to-right main scanning of the head portion 20 in the figure, the roller portion 25 performs the aforementioned scraping operation, and also, the curing device 24 operates as a light source which emits light for curing at least the model material MA in a rearward path in the direction of right-to-left main scanning.

As illustrated in Figs. 1 and 15, the roller portion 25 is placed in front of the curing device 24 in the direction of traveling of the head portion 20, namely, to the left thereof in the figure. As a result, the uncured shaping materials are scraped off by the roller portion 25, and thereafter, the shaping materials are cured by the curing device 24. Due to this placement, the scraping and curing of the shaping materials can be performed along the same path, thereby offering the advantage of high efficiency of the processes.

The three-dimensional shaping apparatus and the three-dimensional shaping method according to the present invention can be preferably applied to three-dimensional shaping using laminations of UV curing resins in an ink-jet manner.

## Claims

1. A three-dimensional shaping apparatus for repeatedly performing operations for ejecting, onto a shaping plate (40), a model material (MA) and a supporting material (SA) as shaping materials while performing scanning at least in a single direction, and for curing the materials to form slices having a predetermined thickness in a height direction, and laminating these slices in the height direction for performing shaping, the model material (MA) being to form a final shaped object, and the supporting material (SA) being to support a protruding portion of the model material (MA) and to be finally removed, the three-dimensional shaping apparatus comprising:
the shaping plate (40) for placing a shaped object thereon;
a shaping-material ejection device including a plurality of model-material ejection nozzles (21) for ejecting the model material (MA) and a plurality of supporting-material ejection nozzles (22) for ejecting the supporting material (SA), such that these pluralities of nozzles are arranged in a single direction;
a curing device (24) for curing the model material (MA) and the supporting material (SA);
a head portion (20) including the shaping-material ejection device and the curing device (24);
a horizontal driving device for reciprocatingly scanning the head portion (20) in a horizontal direction;
a vertical driving device for moving positions of the head portion (20) and the shaping plate (40) with respect to each other in the height direction; and
a control device (10) for controlling driving of the horizontal driving device and the vertical driving device and for controlling the ejection by the shaping-material ejection device and the curing by the curing device (24), wherein
the control device (10) being configured to control for causing the horizontal driving device to reciprocatingly scan the head portion (20) in a single direction, further causing the shaping-material ejection device to eject the model material (MA) and the supporting material (SA) onto the shaping plate (40) and causing the curing device (24) to cure the model material (MA) and/or the supporting material (SA) at least in one of forward and rearward paths during the reciprocating scanning to form the slices, further for moving the positions of the shaping plate (40) and the head portion (20) with respect to each other in the height direction, and for repeating lamination of the slices to perform shaping,
the supporting material (SA) is provided, on an outer surface thereof, with a supporting shell (SS) made of a material different from that of the supporting material (SA), and
the supporting shell (SS) is made of a material having higher rigidity than that of the supporting material (SA), wherein
the supporting shell (SS) is partially provided with an exposing portion at which the supporting material (SA) is exposed, and wherein
the control device (10) is adapted to control the shaping-material ejection device such that the model material (MA) is ejected and cured at positions at which the supporting shell (SS) is to be formed on the outer surface of the supporting material (SA), and the outer surface of the supporting material (SA) is covered with the model material (MA) having a small thickness, during the formation of the respective slices.

2. The three-dimensional shaping apparatus according to claim 1, wherein
the supporting material (SA) is made of a water-soluble material.

3. The three-dimensional shaping apparatus according to claim 1, wherein
the exposing portion includes a plurality of holes (53) formed in a surface of the supporting shell (SS).

4. The three-dimensional shaping apparatus according to claim 1, wherein
the exposing portion includes a cutout line shape (51) formed from a partial opening provided straightly in a surface of the supporting shell (SS).

5. The three-dimensional shaping apparatus according to claim 1, wherein
the supporting shell (SS) includes small pieces (54) having a certain size which are arranged so as to be spaced apart from one another, whereby exposing portions are formed between the small pieces (54).

6. The three-dimensional shaping apparatus according to any one of claims 1 to 2, wherein
the supporting shell (SS) is partially provided with a slot portion having a reduced thickness.

7. The three-dimensional shaping apparatus according to any one of claims 1 to 6, wherein
the supporting shell (SS) is formed so as to be spaced apart from a shaped object formed from the shaped model material (MA) for preventing contact therebetween.

8. The three-dimensional shaping apparatus according to claim 7, wherein
the supporting shell (SS) is formed to have a shape resulted from simplifying an outer shape of the shaped object, and the supporting material (SA) is charged between the supporting shell (SS) and the model material (MA).

9. The three-dimensional shaping apparatus according to any one of claims 1 to 8, wherein
the slices are such that the positions at which the supporting shell (SS) is formed are located at peripheries outside the model material (MA) forming the shaped object.

10. The three-dimensional shaping apparatus according to any one of claims 1 to 9, wherein
the slices include a slice which is not provided with the supporting shell (SS) on the surface of the supporting material (SA).

11. The three-dimensional shaping apparatus according to any one of claims 1 to 10, wherein
the supporting shell (SS) is not provided on the outer surface of the supporting material (SA) at a portion where an angle abruptly changes.

12. A three-dimensional shaping method for repeatedly performing operations for ejecting, onto a shaping plate (40), a model material (MA) and a supporting material (SA) as shaping materials while performing scanning at least in a single direction, and for curing the materials to form slices with a predetermined thickness in a height direction, and laminating the slices in the height direction for performing shaping, the model material (MA) being to form a final shaped object, and the supporting material (SA) being to support a protruding portion of the model material (MA) and to be finally removed, the three-dimensional shaping method comprising the steps of:
reciprocatingly scanning, in a single direction, a head portion (20) including a shaping-material ejection device for ejecting the model material (MA) and/or the supporting material (SA) onto the shaping plate (40) and further including the curing device (24) for curing the model material (MA) and the supporting material (SA), while causing the shaping-material ejection device to eject the model material (MA) and the supporting material (SA) onto the shaping plate (40) at least in one of forward and rearward paths of the reciprocating scanning, and further causing the curing device (24) to cure the model material (MA) and/or the supporting material (SA) in the other of the forward and rearward paths, thereby forming slices;
moving positions of the shaping plate (40) and the head portion (20) with respect to each other in the height direction, and repeating the lamination of the slices, wherein
the steps of forming and laminating the slices include providing, on an outer surface of the supporting material (SA), a supporting shell (SS) made of a material having higher rigidity than that of the supporting material (SA), and partially providing the supporting shell (SS) with an exposing portion at which the supporting material (SA) is exposed, and the step of forming includes ejecting and curing the model material at positions at which the supporting shell (SS) is to be formed on the outer surface of the supporting material (SA), and the outer surface of the supporting material (SA) is covered with the model material (MA) having a small thickness, during the formation of the respective slices.

## Patentansprüche

1. Dreidimensionale Formungseinrichtung zum wiederholten Ausführen von Vorgängen zum Auswerfen, auf eine Formungsplatte (40), eines Modellmaterials (MA) und eines Tragmaterials (SA) als Formungsmaterialien während des Ausführens von Scannen mindestens in eine einzige Richtung, und zum Aushärten der Materialien zum Bilden von Scheiben, die eine vorbestimmte Stärke in eine Höhenrichtung aufweisen, und Schichten dieser Scheiben in die Höhenrichtung zum Ausführen eines Formens, wobei das Modellmaterial (MA) ein abschließendes geformtes Objekt bilden soll, und das Tragmaterial (SA) einen vorragenden Abschnitt des Modellmaterials (MA) tragen und abschließend entfernt werden soll, wobei die dreidimensionale Formungseinrichtung umfasst:
die Formungsplatte (40) zum Platzieren eines geformten Objekts darauf;
eine Formungsmaterialauswurfvorrichtung, die eine Vielzahl von Modellmaterialauswurfdüsen (21) zum Auswerfen des Modellmaterials (MA) sowie eine Vielzahl von Tragmaterialauswurfdüsen (22) zum Auswerfen des Tragmaterials (SA) derart beinhaltet, dass diese Vielzahlen von Düsen in eine einzige Richtung eingerichtet ist;
eine Aushärtungsvorrichtung (24) zum Aushärten des Modellmaterials (MA) und des Tragmaterials (SA);
einen Kopfabschnitt (20), der die Formungsmaterialauswurfvorrichtung und die Aushärtungsvorrichtung (24) beinhaltet;
eine horizontale Antriebsvorrichtung zum Hin- und Her-Scannen des Kopfabschnitts (20) in eine horizontale Richtung;
eine vertikale Antriebsvorrichtung zum Bewegen von Positionen des Kopfabschnitts (20) und der Formungsplatte (40) in Bezug zueinander in die Höhenrichtung; und
eine Steuervorrichtung (10) zum Steuern des Antreibens der horizontalen Antriebsvorrichtung und der vertikalen Antriebsvorrichtung und zum Steuern des Auswurfs durch die Formungsmaterialauswurfvorrichtung und des Aushärtens durch die Aushärtungsvorrichtung (24), wobei
die Steuervorrichtung (10) dazu konfiguriert ist zu steuern, um die horizontale Antriebsvorrichtung zu veranlassen, den Kopfabschnitt (20) in eine einzige Richtung hin und her zu scannen, weiter die Formungsmaterialauswurfvorrichtung zu veranlassen, das Modellmaterial (MA) und das Tragmaterial (SA) auf die Formungsplatte (40) auszuwerfen, und die Aushärtungsvorrichtung (24) zu veranlassen, das Modellmaterial (MA) und/oder das Tragmaterial (SA) mindestens in eine von Vorwärts- und Rückwärtsbahnen während des Hin- und Her-Scannens auszuhärten, um die Scheiben zu bilden, um weiter die Positionen der Formungsplatte (40) und des Kopfabschnitts (20) in Bezug zueinander in die Höhenrichtung zu bewegen, und das Schichten der Scheiben zu wiederholen, um Formung auszuführen,
das Tragmaterial (SA) auf einer Außenoberfläche davon mit einer Tragschale (SS) bereitgestellt ist, die aus einem Material hergestellt ist, das von dem des Tragmaterials (SA) unterschiedlich ist, und
die Tragschale (SS) aus einem Material hergestellt ist, das eine höhere Steifigkeit aufweist als diejenige des Tragmaterials (SA), wobei
die Tragschale (SS) teilweise mit einem Expositionsabschnitt versehen ist, an dem das Tragmaterial (SA) exponiert ist, und wobei
die Steuervorrichtung (10) dazu angepasst ist, die Formungsmaterialauswurfvorrichtung derart zu steuern, dass das Modellmaterial (MA) an Positionen ausgeworfen und ausgehärtet wird, an welchen die Tragschale (SS) auf der Außenoberfläche des Tragmaterials (SA) zu bilden ist, und die Außenoberfläche des Tragmaterials (SA) mit dem Modellmaterial (MA), das eine kleine Stärke aufweist, abgedeckt ist, während des Bildens der jeweiligen Scheiben.

2. Dreidimensionale Formungseinrichtung nach Anspruch 1, wobei das Tragmaterial (SA) aus einem wasserlöslichen Material hergestellt ist.

3. Dreidimensionale Formungseinrichtung nach Anspruch 1, wobei
der Expositionsabschnitt eine Vielzahl von Bohrungen (53), die in einer Oberfläche der Tragschale (SS) gebildet sind, beinhaltet.

4. Dreidimensionale Formungseinrichtung nach Anspruch 1, wobei
der Expositionsabschnitt eine Ausschnittlinienform (51) beinhaltet, die aus einer teilweisen Öffnung gebildet ist, die gerade in einer Oberfläche der Tragschale (SS) bereitgestellt ist.

5. Dreidimensionale Formungseinrichtung nach Anspruch 1, wobei
die Tragschale (SS) kleine Teile (54) beinhaltet, die eine bestimmte Größe aufweisen, die derart eingerichtet sind, dass sie voneinander beabstandet sind, wodurch Expositionsabschnitte zwischen den kleinen Teilen (54) gebildet sind.

6. Dreidimensionale Formungseinrichtung nach einem der Ansprüche 1 bis 2, wobei
die Tragschale (SS) teilweise mit einem Schlitzabschnitt, der eine verringerte Stärke aufweist, versehen ist.

7. Dreidimensionale Formungseinrichtung nach einem der Ansprüche 1 bis 6, wobei
die Tragschale (SS) derart gebildet ist, dass sie von einem geformten Objekt beabstandet ist, das aus dem geformten Modellmaterial (MA) gebildet ist, um Kontakt dazwischen zu verhindern.

8. Dreidimensionale Formungseinrichtung nach Anspruch 7, wobei
die Tragschale (SS) gebildet ist, um eine Form aufzuweisen, die aus Vereinfachen einer Außenform des geformten Objekts resultiert, und das Tragmaterial (SA) zwischen der Tragschale (SS) und dem Modellmaterial (MA) geladen ist.

9. Dreidimensionale Formungseinrichtung nach einem der Ansprüche 1 bis 8, wobei
die Scheiben derart sind, dass die Positionen, an welchen die Tragschale (SS) gebildet ist, an Peripherien außerhalb des Modellmaterials (MA), das das geformte Objekt bildet, liegen.

10. Dreidimensionale Formungseinrichtung nach einem der Ansprüche 1 bis 9, wobei
die Scheiben eine Scheibe, die nicht mit der Tragschale (SS) versehen ist, auf der Oberfläche des Tragmaterials (SA) beinhalten.

11. Dreidimensionale Formungseinrichtung nach einem der Ansprüche 1 bis 10, wobei
die Tragschale (SS) nicht auf der Außenoberfläche des Tragmaterials (SA) an einem Abschnitt, an dem sich ein Winkel abrupt ändert, bereitgestellt ist.

12. Dreidimensionale Formungsverfahren zum wiederholten Ausführen von Vorgängen zum Auswerfen, auf eine Formungsplatte (40), eines Modellmaterials (MA) und eines Tragmaterials (SA) als Formungsmaterialien während des Ausführens von Scannen mindestens in eine einzige Richtung, und zum Aushärten der Materialien zum Bilden von Scheiben mit einer vorbestimmten Stärke in eine Höhenrichtung, und Schichten der Scheiben in die Höhenrichtung zum Ausführen von Formen, wobei das Modellmaterial (MA) ein abschließendes geformtes Objekt bilden soll, und das Tragmaterial (SA) einen vorragenden Abschnitt des Modellmaterials (MA) tragen und abschließend entfernt werden soll, wobei das dreidimensionale Formungsverfahren die Schritte umfasst zum:
Hin- und Her-Scannen, in eine einzige Richtung, eines Kopfabschnitts (20), der eine Formungsmaterialauswurfvorrichtung zum Auswerfen des Modellmaterials (MA) und/oder des Tragmaterials (SA) auf eine Formungsplatte (40) beinhaltet, und weiter die Aushärtungsvorrichtung (24) zum Aushärten des Modellmaterials (MA) und des Tragmaterials (SA) beinhaltet, während die Formungsmaterialauswurfvorrichtung veranlasst wird, das Modellmaterial (MA) und das Tragmaterial (SA) auf die Formungsplatte (40) mindestens in eine von Vorwärts- und Rückwärtsbahnen des Hin- und Her-Scannens auszuwerfen und weiter die Aushärtungsvorrichtung (24) zu veranlassen, das Modellmaterial (MA) und/oder das Tragmaterial (SA) in die andere der Vorwärts- und Rückwärtsbahnen auszuhärten, wodurch Scheiben gebildet werden;
Bewegen von Positionen der Formungsplatte (40) und des Kopfabschnitts (20) in Bezug zueinander in die Höhenrichtung und Wiederholen des Schichtens der Scheiben, wobei
die Schritte des Bildens und Schichtens der Scheiben ein Bereitstellen, auf einer Außenoberfläche des Tragmaterials (SA), einer Tragschale (SS), die aus einem Material hergestellt ist, das eine höhere Steifigkeit aufweist als diejenige des Tragmaterials (SA), und teilweises Versehen der Tragschale (SS) mit einem Expositionsabschnitt, an dem das Tragmaterial (SA) exponiert ist, beinhaltet, und der Schritt des Bildens ein Auswerfen und Aushärten des Modellmaterials an Positionen beinhaltet, an welchen die Tragschale (SS) auf der Außenoberfläche des Tragmaterials (SA) zu bilden ist, und die Außenoberfläche des Tragmaterials (SA) mit dem Modellmaterial (MA), das eine geringe Stärke aufweist, abgedeckt ist, während des Formens der jeweiligen Scheiben.

## Revendications

1. Appareil de formage en trois dimensions permettant de réaliser de manière répétée des opérations permettant d'éjecter, sur une plaque de formage (40), un matériau de modèle (MA) et un matériau de support (SA) en tant que matériaux de formage tout en réalisant un balayage au moins dans une seule direction, et de durcir les matériaux pour former des tranches présentant une épaisseur prédéterminée dans une direction de hauteur, et stratifier ces tranches dans la direction de hauteur pour réaliser un formage, le matériau de modèle (MA) étant destiné à former un objet final issu d'un formage, et le matériau de support (SA) étant destiné à supporter une partie saillante du matériau de modèle (MA) et à être finalement retiré, l'appareil de formage en trois dimensions comprenant :
la plaque de formage (40) permettant de placer un objet issu d'un formage sur celle-ci;
un dispositif d'éjection de matériau de formage incluant une pluralité de buses d'éjection de matériau de modèle (21) permettant d'éjecter le matériau de modèle (MA) et une pluralité de buses d'éjection de matériau de support (22) permettant d'éjecter le matériau de support (SA), de sorte que ces pluralités de buses soient agencées dans une seule direction ;
un dispositif de durcissement (24) permettant de durcir le matériau de modèle (MA) et le matériau de support (SA) ;
une partie de tête (20) incluant le dispositif d'éjection de matériau de formage et le dispositif de durcissement (24) ;
un dispositif d'entraînement horizontal permettant de balayer de manière alternative la partie de tête (20) dans une direction horizontale ;
un dispositif d'entraînement vertical permettant de déplacer des positions de la partie de tête (20) et de la plaque de formage (40) l'une par rapport à l'autre dans la direction de hauteur ; et
un dispositif de commande (10) permettant de commander un entraînement du dispositif d'entraînement horizontal et du dispositif d'entraînement vertical et permettant de commander l'éjection par le dispositif d'éjection de matériau de formage et le durcissement par le dispositif de durcissement (24), dans lequel
le dispositif de commande (10) étant configuré pour commander pour amener le dispositif d'entraînement horizontal à balayer de manière alternative la partie de tête (20) dans une seule direction, amenant en outre le dispositif d'éjection de matériau de formage à éjecter le matériau de modèle (MA) et le matériau de support (SA) sur la plaque de formage (40) et amenant le dispositif de durcissement (24) à durcir le matériau de modèle (MA) et/ou le matériau de support (SA) au moins dans un de chemins vers l'avant et vers l'arrière pendant le balayage alternatif pour former les tranches, en outre pour déplacer les positions de la plaque de formage (40) et de la partie de tête (20) l'une par rapport à l'autre dans la direction de hauteur, et pour répéter une stratification des tranches pour réaliser un formage,
le matériau de support (SA) est doté, sur une surface extérieure de celui-ci, d'une enveloppe de support (SS) faite d'un matériau différent de celui du matériau de support (SA), et
l'enveloppe de support (SS) est faite d'un matériau présentant une rigidité supérieure à celle du matériau de support (SA), dans lequel
l'enveloppe de support (SS) est partiellement dotée d'une partie d'exposition au niveau de laquelle le matériau de support (SA) est exposé, et dans lequel
le dispositif de commande (10) est adapté pour commander le dispositif d'éjection de matériau de formage de sorte que le matériau de modèle (MA) soit éjecté et durci à des positions auxquelles l'enveloppe de support (SS) doit être formée sur la surface extérieure du matériau de support (SA), et la surface extérieure du matériau de support (SA) est recouverte du matériau de modèle (MA) présentant une petite épaisseur, pendant la formation des tranches respectives.

2. Appareil de formage en trois dimensions selon la revendication 1, dans lequel
le matériau de support (SA) est fait d'un matériau hydrosoluble.

3. Appareil de formage en trois dimensions selon la revendication 1, dans lequel
la partie d'exposition inclut une pluralité de trous (53) formés dans une surface de l'enveloppe de support (SS).

4. Appareil de formage en trois dimensions selon la revendication 1, dans lequel
la partie d'exposition inclut une forme de ligne découpée (51) formée à partir d'une ouverture partielle fournie de manière droite dans une surface de l'enveloppe de support (SS).

5. Appareil de formage en trois dimensions selon la revendication 1, dans lequel
l'enveloppe de support (SS) inclut de petites pièces (54) présentant une certaine taille qui sont agencées de manière à être espacées les unes des autres, selon lequel des parties d'exposition sont formées entre les petites pièces (54).

6. Appareil de formage en trois dimensions selon l'une quelconque des revendications 1 à 2, dans lequel
l'enveloppe de support (SS) est partiellement dotée d'une partie fente présentant une épaisseur réduite.

7. Appareil de formage en trois dimensions selon l'une quelconque des revendications 1 à 6, dans lequel
l'enveloppe de support (SS) est formée de manière à être espacée d'un objet issu d'un formage formé à partir du matériau de modèle (MA) issu d'un formage pour empêcher un contact entre ceux-ci.

8. Appareil de formage en trois dimensions selon la revendication 7, dans lequel
l'enveloppe de support (SS) est formée pour présenter une forme résultant d'une simplification d'une forme extérieure de l'objet issu d'un formage, et le matériau de support (SA) est chargé entre l'enveloppe de support (SS) et le matériau de modèle (MA).

9. Appareil de formage en trois dimensions selon l'une quelconque des revendications 1 à 8, dans lequel
les tranches sont telles que les positions auxquelles l'enveloppe de support (SS) est formée sont situées à des périphéries hors du matériau de modèle (MA) formant l'objet issu d'un formage.

10. Appareil de formage en trois dimensions selon l'une quelconque des revendications 1 à 9, dans lequel
les tranches incluent une tranche qui n'est pas dotée de l'enveloppe de support (SS) sur la surface du matériau de support (SA).

11. Appareil de formage en trois dimensions selon l'une quelconque des revendications 1 à 10, dans lequel
l'enveloppe de support (SS) n'est pas fournie sur la surface extérieure du matériau de support (SA) au niveau d'une partie où un angle change brusquement.

12. Procédé de formage en trois dimensions permettant de réaliser de manière répétée des opérations permettant d'éjecter, sur une plaque de formage (40), un matériau de modèle (MA) et un matériau de support (SA) en tant que matériaux de formage tout en réalisant un balayage au moins dans une seule direction, et de durcir les matériaux pour former des tranches avec une épaisseur prédéterminée dans une direction de hauteur, et stratifier les tranches dans la direction de hauteur pour réaliser un formage, le matériau de modèle (MA) étant destiné à former un objet final issu d'un formage, et le matériau de support (SA) étant destiné à supporter une partie saillante du matériau de modèle (MA) et à être finalement retiré, le procédé de formage en trois dimensions comprenant les étapes consistant à :
balayer de manière alternative, dans une seule direction, une partie de tête (20) incluant un dispositif d'éjection de matériau de formage permettant d'éjecter le matériau de modèle (MA) et/ou le matériau de support (SA) sur la plaque de formage (40) et incluant en outre le dispositif de durcissement (24) permettant de durcir le matériau de modèle (MA) et le matériau de support (SA), tout en amenant le dispositif d'éjection de matériau de formage à éjecter le matériau de modèle (MA) et le matériau de support (SA) sur la plaque de formage (40) au moins dans un de chemins vers l'avant et vers l'arrière du balayage alternatif, et en amenant en outre le dispositif de durcissement (24) à durcir le matériau de modèle (MA) et/ou le matériau de support (SA) dans l'autre des chemins vers l'avant et vers l'arrière, formant ainsi des tranches ;
déplacer des positions de la plaque de formage (40) et de la partie de tête (20) l'une par rapport à l'autre dans la direction de hauteur, et répéter la stratification des tranches, dans lequel
les étapes de formation et stratification des tranches incluent une fourniture, sur une surface extérieure du matériau de support (SA), d'une enveloppe de support (SS) faite d'un matériau présentant une rigidité supérieure à celle du matériau de support (SA), et le fait de doter partiellement l'enveloppe de support (SS) d'une partie d'exposition au niveau de laquelle le matériau de support (SA) est exposé, et l'étape de formation inclut une éjection et un durcissement du matériau de modèle à des positions auxquelles l'enveloppe de support (SS) doit être formée sur la surface extérieure du matériau de support (SA), et la surface extérieure du matériau de support (SA) est recouverte du matériau de modèle (MA) présentant une petite épaisseur, pendant la formation des tranches respectives.
